(19) Europäisches Patentamt
European Patent Office
Office européen des brevets

(11) **EP 2 326 033 A1**

(12) **EUROPEAN PATENT APPLICATION**
published in accordance with Art. 153(4) EPC

(43) Date of publication:
**25.05.2011 Bulletin 2011/21**

(51) Int Cl.:
***H04B 10/12*** *(2006.01)*

(21) Application number: **09771935.5**

(22) Date of filing: **27.05.2009**

(86) International application number:
**PCT/CN2009/072025**

(87) International publication number:
**WO 2010/000165 (07.01.2010 Gazette 2010/01)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **30.06.2008 CN 200810128212**

(71) Applicant: **Huawei Technologies Co., Ltd.**
**Longgang District, Shenzhen**
**Guangdong 518129 (CN)**

(72) Inventors:
• **ZHANG, Xinliang**
**c/o Huawei Technologies Co.Ltd., Int.Prop.Dept.**
**Shenzhen (CN)**

• **YU, Yu**
**c/o Huawei Technologies Co.Ltd., Int.Prop.Dept.**
**Shenzhen (CN)**
• **WEI, Lun**
**c/o Huawei Technologies Co.Ltd., Int.Prop.Dept.**
**Shenzhen (CN)**
• **LI, Lijun**
**c/o Huawei Technologies Co.Ltd., Int.Prop.Dept.**
**Shenzhen (CN)**

(74) Representative: **Kreuz, Georg Maria et al**
**Huawei Technologies Duesseldorf GmbH**
**Dessauerstrasse 3**
**80992 München (DE)**

(54) **DIFFERENTIAL QUADRATURE PHASE SHIFT KEYING SYSTEM, METHOD AND EQUIPMENT**

(57)    A differential quadrature phase shift keying (DQPSK) system, method, and device are disclosed. The DQPSK system includes: a transmitter, configured to: pre-code an input first original signal and second original signal, and generate an in-phase signal and a quadrature signal; modulate the in-phase signal to generate a first differential phase shift keying (DPSK) signal, and modulate the quadrature signal to generate a second DPSK signal; perform a 90 degree phase shift on the first DPSK signal or the second DPSK signal, and interfere with the other DPSK signal to obtain a DQPSK signal; and send the DQPSK signal to a receiver; the receiver, configured to: demodulate the DQPSK signal sent from the transmitter in detuned filter mode, and restore the first original signal and the second original signal through optical/electrical (O/E) conversion. With the present invention, the accurate control on the phase difference between two arms of an Asymmetric Mach-Zehnder Interferometer (AMZI) is avoided, thus facilitating the signal control and adjustment, and greatly lowering the system cost.

FIG. 3

EP 2 326 033 A1

**Description**

This application claims priority to Chinese Patent Application No. 200810128212.2, filed with the Chinese Patent Office on June 30, 2008 and entitled "Differential Quadrature Phase Shift Keying System, Method, and Device", which is incorporated herein by reference in its entirety.

**FIELD OF THE INVENTION**

The present invention relates to the field of communication technologies, and in particular to a differential quadrature phase shift keying (DQPSK) system, method, and device.

**BACKGROUND OF THE INVENTION**

A DQPSK signal has high spectrum efficiency and can maintain the dispersion tolerance under the same symbol rate. In addition, the system capacity of the DQPSK signal may be twice that of a differential phase shift keying (DPSK) signal. Further, because the DQPSK signal may be transmitted with a constant envelope or an approximately constant envelope and may effectively inhibit the non-linear effect of various fibers, for example, cross-phase modulation (XPM) and self-phase modulation (SPM), the DQPSK signal enjoys a better application prospect in high-speed large capacity transmission systems.

The main difference between a multi-channel system based on the DQPSK modulation format and a common multi-channel system lies in the transmitter and the receiver. The transmitter may generate a DQPSK signal by using the following solution: two parallel Mach-Zehnder modulators (MZMs); one MZM and one phase modulator (PM) in serial connection; or one MZM driven by a multilevel electrical signal. Currently, two parallel MZMs are mostly used. The receiver of the multi-channel system based on the DQPSK modulation format is relatively complex. Generally, the original signal can be demodulated only by using two asymmetric MZMs and two balance detectors. In addition, the DQPSK signal is more sensitive to the detuning of an interferometer than the DPSK signal. If a multi-channel DQPSK system needs to be implemented, the structure of the receiver is complex and the cost may be higher.

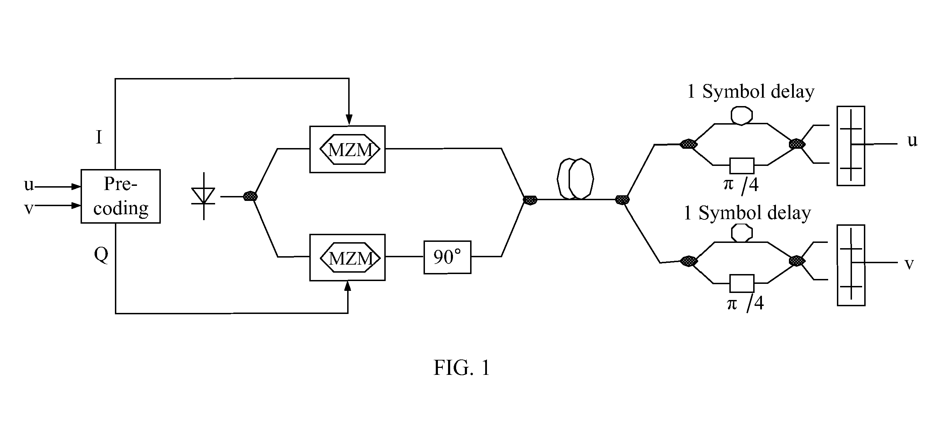

Taking a single-channel DQPSK system as an example, the transmitter uses two parallel MZMs, and the receiver needs to use two asymmetric mach-zehnder interferometers (AMZIs), as shown in FIG. 1. Two irrelevant data information streams u and v are changed to an in-phase signal I and a quadrature signal Q after being pre-coded in the circuit domain. The encoding rules are shown in the following formulas (1) and (2):

$$I_k = u_k \oplus (\bar{I}_{k-1}\, Q_{k-1}) + v_k \oplus (\bar{I}_{k-1}\, \bar{Q}_{k-1}) \tag{1}$$

$$Q_k = u_k \oplus (\bar{I}_{k-1}\, \bar{Q}_{k-1}) + v_k \oplus (I_{k-1}\, \bar{Q}_{k-1}) \tag{2}$$

The in-phase signal I and the quadrature signal Q based on the non-return-to-zero (NRZ) format are used to drive two MZMs that are working in the push-pull state. That is, the sum of the drive voltages of two arms is a fixed bias voltage. The working conditions of the MZM are set as follows: The bias point is a transmission curve zero point; the drive signal has the same frequency as the output signal; and the peak value of the drive signal is $2V_\pi$. $V_\pi$ refers to the switching voltage needed by the output intensity to change from the maximum value to the minimum value when the MZM works in single-arm mode. In this way, two non-return-to-zero differential phase shift keying (NRZ-DPSK) signals are obtained from the output ends of the two MZMs. At this time, the phases of the two NRZ-DPSK signals are zero or π. To obtain four-level phase modulation, one NRZ-DPSK signal requires an additional phase shift of $\dfrac{\pi}{2}$. A DQPSK signal is obtained by interfering with the two NRZ-DPSK signals, where the DQPSK signal carries four kinds of phase information: [$\dfrac{\pi}{4}$, $\dfrac{3\pi}{4}$, $\dfrac{5\pi}{4}$, and $\dfrac{7\pi}{4}$]; but the phase information does not indicate the desired u and v. Only the phase difference between the adjacent elements is the information transmitted by the DQPSK signal.

Two AMZIs are needed to demodulate the DQPSK signal. The DQPSK signal is divided into two signals with equal power, and the two signals enter the upper AMZI and lower AMZI respectively. There are one bit delay and a $\dfrac{\pi}{4}$

phase difference between two arms of the upper AMZI; and there are one bit delay and a $-\dfrac{\pi}{4}$ phase difference

between two arms of the lower AMZI. Because there is one bit delay in the AMZI, the phase difference between two adjacent bits may be extracted. The original data u may be obtained by balance detection performed on the two output ends of the upper AMZI, and the original data v may be obtained by balance detection performed on the lower AMZI.

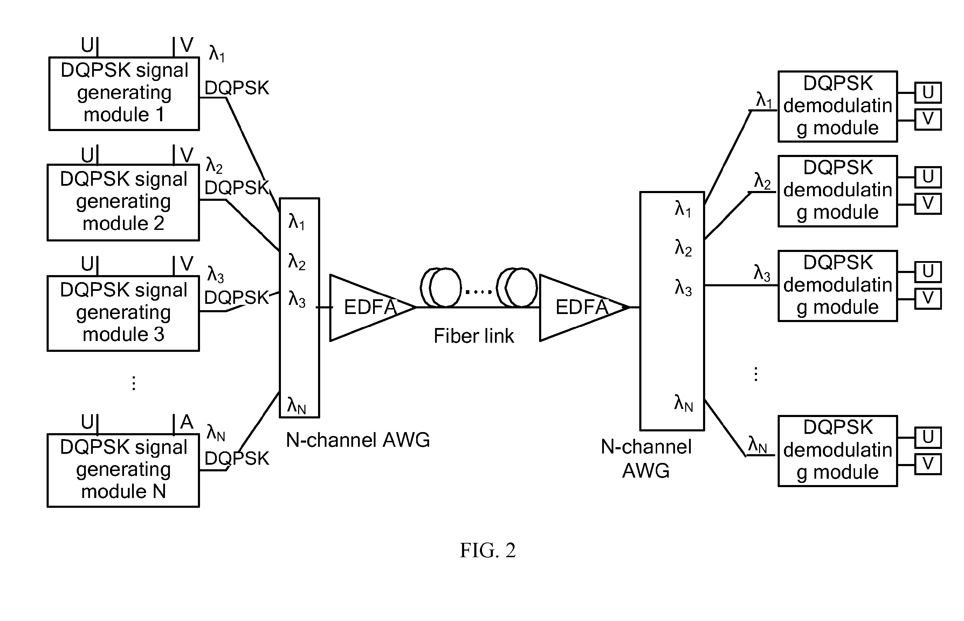

FIG. 2 illustrates a multi-channel DQPSK system based on the solution for generating and demodulating a single-channel DQPSK signal. At the transmitter, N optical signals with different wavelengths are fed to different DQPSK signal generating modules, which output multiple DQPSK signals; these DQPSK signals are multiplexed by the multiplexer, amplified by the erbium-doped optical fiber amplifier (EDFA), and then transmitted in the fiber link. At the receiver, after the signal is amplified by the front-end EDFA, the signal is demultiplexed into N signals by a corresponding demultiplexer; these signals are demodulated into original data streams by different DQPSK demodulating modules. At this time, the channel center wavelengths of the multiplexer and demultiplexer in the system are aligned with the carrier wavelength of the original DQPSK signal.

In the prior art, each signal of the receiver must be demodulated by using two AMZIs and two balance detectors, making the system structure more complex. The control on the AMZI phase shift should be accurate, and the determined AMZI can be only applicable to the determined working rate. This is inconvenient for the signal control and adjustment; the signal power loss is large after the signal is demultiplexed by the demultiplexer and combined and split multiple times.

## SUMMARY OF THE INVENTION

The present invention provides a DQPSK system, method, and device. By demodulating a DQPSK signal and by using the multiplexer and demultiplexer in a dense wavelength division multiplexing (DWDM) system, DQPSK signal transmission may be implemented on multiple channels, without additional phase demodulation components at the receiver.

According to the first aspect of the present invention a differential quadrature phase shift keying (DQPSK) system includes a transmitter, where the transmitter includes:

a pre-coder, configured to pre-code an input first original signal and second original signal according to a predetermined encoding rule, and generate an in-phase signal and a quadrature signal;
a first modulator, configured to modulate the in-phase signal to generate a first DPSK signal;
a second modulator, configured to modulate the quadrature signal to generate a second DPSK signal; and
an interferometer, configured to: perform a 90 degree phase shift on the first DPSK signal or the second DPSK signal, interfere with and overlap with the other DPSK signal to obtain a DQPSK signal, and send the DQPSK signal to a receiver.

The DQPSK system further includes the receiver, where the receiver includes:

a splitter, configured to split the DQPSK signal sent from the transmitter into two signals, and output the two signals; and
a demodulator, configured to demodulate the two DQPSK signals output by the splitter.

In a particular implementation form the DQPSK system according to the first aspect of the present invention includes:

a transmitter, configured to: pre-code N first original signals and N second original signals according to a predetermined encoding rule to generate N in-phase signals and N quadrature signals; modulate the N in-phase signals to generate N first DPSK signals, and modulate the N quadrature signals to generate N second signals; perform a 90 degree phase shift on the N first DPSK signals or the N second DPSK signals, and interfere with and overlap with the other N DPSK signals to obtain N DQPSK signals; multiplex the N DQPSK signals into an N-channel DQPSK signal; and send the N-channel DQPSK signal to a receiver; and
the receiver, configured to: demultiplex the N-channel DQPSK signal sent from the transmitter into N DQPSK signals; demodulate the N DQPSK signals in detuned filter mode; and restore the N first original signals and the N second original signals, where N is an integer greater than 1.

According to the second aspect of the present invention a method for processing signals includes in its first implementation form:

by a transmitter, pre-coding an input first original signal and second original signal, and generating an in-phase signal and a quadrature signal; modulating the in-phase signal to generate a first DPSK signal, and modulating the quadrature signal to generate a second DPSK signal; performing a 90 degree phase shift on the first DPSK signal or the second DPSK signal, and interfering with the other DPSK signal to obtain a DQPSK signal.

The method for processing signals according to the second aspect of the present invention includes in its second implementation form:

by a transmitter, pre-coding input N first original signals and N second original signals, and generating N in-phase signals and N quadrature signals;
modulating the N in-phase signals to generate N first NRZ-DPSK signals, and modulating the N quadrature signals to generate N second DPSK signals; and
performing a 90 degree phase shift on the N first DPSK signals or the N second DPSK signals, interfering with the other N DPSK signals to obtain N DQPSK signals, and multiplexing the N DQPSK signals into an N-channel DQPSK signal, where N is an integer greater than 1.

In the present invention, two detuned filters are used to demodulate the DQPSK signal at the receiver. This simplifies the DQPSK demodulation solution in the prior art where two AMZIs and two balance detectors are used for demodulation, making it unnecessary to perform accurate control on the phase difference between the two arms of the AMZI, facilitating the signal control and adjustment, and greatly lowering the system cost.

Brief Description of the Drawings

FIG. 1 is a schematic diagram illustrating generation and demodulation of a DQPSK signal in the prior art;
FIG. 2 is a schematic diagram illustrating a multi-channel DQPSK system in the prior art;
FIG. 3 is a schematic diagram illustrating a transmitter in a first embodiment of the present invention;
FIG. 4 is a schematic diagram illustrating a receiver in the first embodiment of the present invention;
FIG. 5 is a schematic diagram illustrating another receiver in the first embodiment of the present invention;
FIG. 6 is a schematic diagram illustrating a transmitter in a third embodiment of the present invention;
FIG. 7 is a schematic diagram illustrating a receiver in a fourth embodiment of the present invention;
FIG. 8 is a schematic diagram illustrating a transmitter in a fifth embodiment of the present invention;
FIG. 9 is a schematic diagram illustrating a DQPSK signal generating module in a seventh embodiment of the present invention;
FIG. 10 is a schematic diagram illustrating a DQPSK signal decoding module in an eighth embodiment of the present invention;
FIG. 11 is a schematic diagram illustrating the spectrum of an arrayed waveguide grating (AWG) bias channel in a ninth embodiment of the present invention;
FIG. 12 shows a structure of a DWDM system based on the DQPSK modulation format in a tenth embodiment of the present invention;
FIG. 13 shows a structure of a receiver of a 40 Gbps DQPSK system in an eleventh embodiment of the present invention;
FIG. 14 shows a structure of a receiver of a DQPSK system with an add/drop multiplexer (ADM) in an embodiment of the present invention;
FIGS. 15A and 15B illustrate an analog transmission system in a twelfth embodiment of the present invention;
FIG. 16a illustrates a spectrum of four DQPSK signals after being multiplexed by an AWG in an embodiment of the present invention;
FIG. 16b illustrates a spectrum of a signal after being demultiplexed by an eight-channel AWG;
FIG. 17a illustrates a demodulated signal waveform in an embodiment of the present invention;
FIG. 17b illustrates an eye pattern in an embodiment of the present invention;
FIG. 18 shows a structure of a receiver of a DQPSK system with a demultiplexer in an embodiment of the present invention; and
FIG. 19 shows a structure of a receiver of a DQPSK system with a detuned filter for demodulation in an embodiment of the present invention.

Detailed Description of the Embodiments

The present invention is hereinafter described in detail with reference to the accompanying drawings and exemplary embodiments.

In embodiments of the present invention, for the application of a multi-channel DQPSK system, the encoding rule in the DQPSK signal generating module is modified, so that the receiver directly uses a demultiplexer with a proper center wavelength offset to demodulate and detect the DQPSK signal. In this way, two AMZIs and two balance detectors may be saved, thus simplifying the system, lowering the system cost, and improving the reliability.

**Embodiment 1**

A DQPSK system provided in the first embodiment of the present invention includes a transmitter and a receiver. The transmitter is configured to: pre-code an input first original signal and second original signal, and generate an in-phase signal and a quadrature signal; modulate the in-phase signal to generate a first NRZ-DPSK signal, and modulate the quadrature signal to generate a second NRZ-DPSK signal; perform a 90 degree phase shift on the first NRZ-DPSK signal or the second NRZ-DPSK signal, and interfere with the other NRZ-DPSK signal to obtain a DQPSK signal; and send the DQPSK signal to the receiver. The receiver is configured to: demodulate the DQPSK signal sent from the transmitter in detuned filter mode and restore the first original signal and the second original signal through optical/ electrical (O/E) conversion.

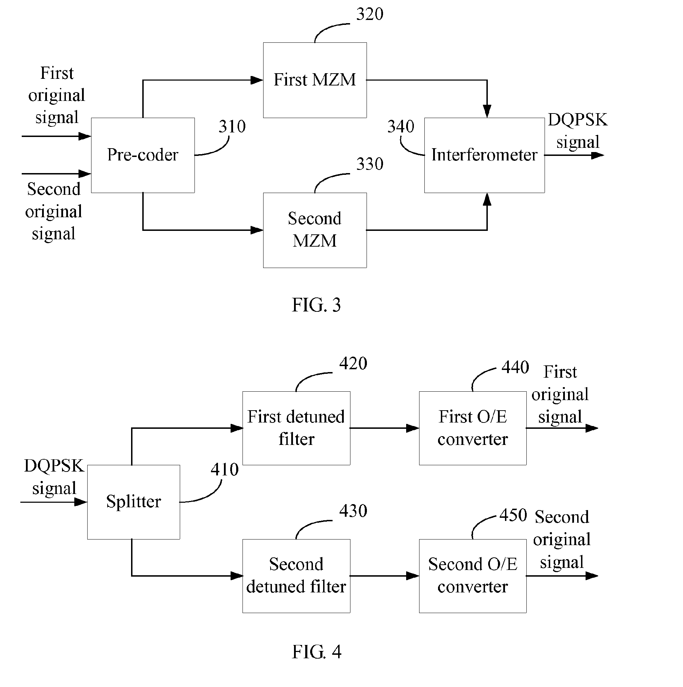

As shown in FIG. 3, the transmitter includes: a pre-coder 310, a first MZM 320, a second MZM 330, and an interferometer 340. Although this embodiment is based on two modulators, the actual number of modulators may vary according to the requirements. The pre-coder 310 is configured to receive the first original signal and the second original signal, and pre-code the first original signal and the second original signal according to a predetermined encoding rule to generate an in-phase signal and a quadrature signal. The first MZM 320 is configured to obtain a first NRZ-DPSK signal through modulation and driving by the in-phase signal. The second MZM 330 is configured to obtain a second NRZ-DPSK signal through modulation and driving by the quadrature signal. The interferometer 340 is configured to: perform a 90 degree phase shift on the first NRZ-DPSK signal or the second NRZ-DPSK signal, interfere with the other NRZ-DPSK signal to obtain a DQPSK signal, and send the DQPSK signal to the receiver.

As shown in FIG. 4, the receiver includes: a splitter 410, a first detuned filter 420, a second detuned filter 430, a first O/E converter 440, and a second O/E converter 450. Although this embodiment is based on two detuned filters and two O/E converters, the actual number of detuned filters and O/E converters may vary according to the requirement. The splitter 410 is configured to split the DQPSK signal sent from the transmitter into two DQPSK signals, and output the two signals. The first detuned filter 420 is configured to demodulate one DQPSK signal output by the splitter in detuned filter mode, and output the demodulated signal to the first O/E converter 440. The second detuned filter 430 is configured to demodulate the other DQPSK signal output by the splitter in detuned filter mode, and output the demodulated signal to the second O/E converter 450. The first O/E converter 440 is configured to convert the signal demodulated by the first detuned filter 420 into an electrical signal, and output the restored first original signal. The second O/E converter 450 is configured to convert the signal demodulated by the second detuned filter 430 into an electrical signal, and output the restored second original signal.

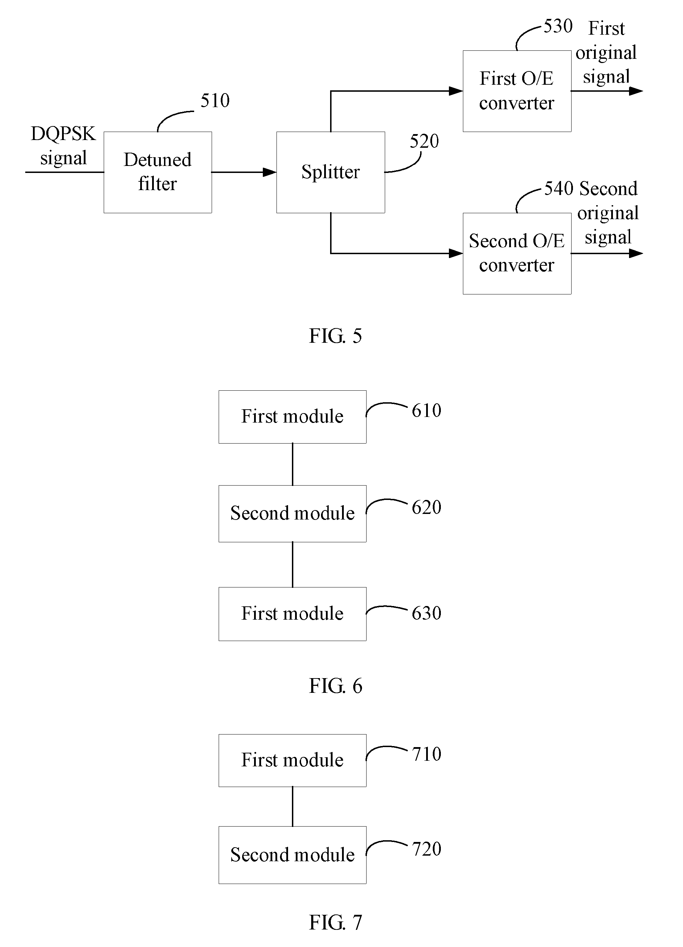

Certainly, in the first embodiment of the present invention, when the transmitter remains unchanged, the receiver may also be changed to that shown in FIG. 5. That is, the receiver includes: a detuned filter 510, a splitter 520, a first O/E converter 530, and a second O/E converter 540. The detuned filter 510 is configured to demodulate the DQPSK signal sent from the transmitter in detuned filter mode, and output the demodulated signal to the splitter. The splitter 520 is configured to split the demodulated signal sent from the detuned filter into two demodulated signals, and output the two demodulated signals. The first O/E converter 530 is configured to convert one demodulated signal output by the splitter into an electrical signal, and output the restored first original signal. The second O/E converter 540 is configured to convert the other demodulated signal output by the splitter into an electrical signal, and output the restored second original signal.

**Embodiment 2**

A DQPSK system provided in the second embodiment of the present invention includes a transmitter and a receiver. The transmitter is configured to: pre-code input N first original signals and N second original signals, and generate N in-phase signals and N quadrature signals; modulate the N in-phase signals to generate N first NRZ-DPSK signals, and modulate the N quadrature signals to generate N second NRZ-DPSK signals; perform a 90 degree phase shift on the N first NRZ-DPSK signals or the N second NRZ-DPSK signals, and interfere with the other N NRZ-DPSK signals to obtain N DQPSK signals; multiplex the N DQPSK signals into a N-channel DQPSK signal, and send the N-channel DQPSK signal to the receiver. The receiver is configured to: demultiplex the N-channel DQPSK signal sent from the transmitter into N DQPSK signals; demodulate the N DQPSK signals in detuned filter mode; and restore the N first original signals and the N second original signals through O/E conversion, where N is an integer greater than 1.

The transmitter includes N DQPSK signal generating modules and one N-channel AWG. Each DQPSK signal generating module includes: a pre-coder, a first MZM, a second MZM, and an interferometer. The pre-coder is configured to: receive a first original signal and a second original signal; pre-code the first original signal and the second original signal according to a predetermined encoding rule, and generate an in-phase signal and a quadrature signal. The first MZM is configured to obtain a first NRZ-DPSK signal through modulation and driving by the in-phase signal. The second MZM is configured to obtain a second NRZ-DPSK signal through modulation and driving by the quadrature signal. The interferometer is configured to perform a 90 degree phase shift on the first NRZ-DPSK signal or the second NRZ-DPSK signal, and interfere with the other NRZ-DPSK signal to obtain a DQPSK signal. The N-channel AWG is configured to multiplex N DQPSK signals generated by the N DQPSK signal generating modules into an N-channel DQPSK signal, and send the N-channel DQPSK signal to the receiver.

The receiver includes an N-channel AWG, N splitters, 2N detuned filters, and 2N O/E converters. In this embodiment, N splitters may be replaced by an N-channel splitter and 2N detuned filters may also be replaced by two N-channel detuned filters. The N-channel AWG is configured to demultiplex one N-channel DQPSK signal sent from the transmitter into N DQPSK signals, and output each DQPSK signal to a corresponding splitter. The splitter is configured to split one of demultiplexed N DQPSK signals sent from the N-channel AWG into two DQPSK signals, and output the two DQPSK signals. The detuned filter is configured to demodulate one DQPSK signal output by the splitter in detuned filter mode, and output the demodulated signal to a corresponding O/E converter. The O/E converter is configured to convert the demodulated signal sent from the detuned filter into an electrical signal, and output one original signal of the restored N first original signals or N second original signals.

Certainly, when the transmitter remains unchanged in this embodiment, the receiver may also include: a 2N-channel AWG and 2N O/E converts. The 2N-cahnnel AWG is configured to demodulate one N-channel DQPSK signal sent from the transmitter in detuned filter mode to generate 2N demodulated signals, and output each demodulated signal to a corresponding O/E converter. The O/E converter is configured to convert one demodulated signal output by the 2N-channel AWG into an electrical signal, and output one original signal of the restored N first original signals or N second original signals.

Certainly, when the transmitter in this embodiment remains unchanged, the receiver may also include: a splitter, a first ADM, a second ADM, a first N-channel AWG, a second N-channel AWG, and 2N O/E converters. The splitter is configured to split one N-channel DQPSK signal sent from the transmitter into two N-channel DQPSK signals, and output the N-channel DQPSK signals. The first ADM is configured to: extract odd-channel signals from one N-channel DQPSK signal output by the splitter, demodulate the odd-channel signals in detuned filter mode to generate N demodulated signals, and output the demodulated signals to the first AWG. The second ADM is configured to: extract even-channel signals from one N-channel DQPSK signal output by the splitter, demodulate the even-channel signals in detuned filter mode to generate N demodulated signals, and output the demodulated signals to the second AWG. The first AWG is configured to demultiplex N demodulated signals sent from the first ADM, and output each demodulated signal to a corresponding O/E converter. The second AWG is configured to demultiplex N demodulated signals sent from the second ADM, and output each demodulated signal to a corresponding O/E converter. The O/E converter is configured to convert the demodulated signal output by the first AWG or the second AWG into an electrical signal, and output one original signal of the restored N first original signals or N second original signals.

## Embodiment 3

A transmitter provided in the third embodiment of the present invention is applied in the DQPSK system. As shown in FIG. 6, the transmitter includes: a first module 610, configured to pre-code an input first original signal and second original signal, and generate an in-phase signal and a quadrature signal; a second module 620, configured to modulate the in-phase signal to generate a first NRZ-DPSK signal, and modulate the quadrature signal to generate a second NRZ-DPSK signal; a third module 630, configured to: perform a 90 degree phase shift on the first NRZ-DPSK signal or the second NRZ-DPSK signal, interfere with the other NRZ-DPSK signal to obtain a DQPSK signal, and send the DQPSK signal.

## Embodiment 4

A receiver provided in this embodiment is applied in a DQPSK system. As shown in FIG. 7, the receiver includes a first module 710 and a second module 720. The first module 710 is configured to demodulate the received DQPSK signal in detuned filter mode. The method for obtaining the DQPSK signal includes: pre-coding an input first original signal and second original signal at the transmitter, and generating an in-phase signal and a quadrature signal; modulating the in-phase signal to generate a first NRZ-DPSK signal, and modulating the quadrature signal to generate a second NRZ-DPSK signal; performing a 90 degree phase shift on the first NRZ-DPSK signal or the second NRZ-DPSK signal, and interfering with the other NRZ-DPSK signal to obtain a DQPSK signal, and sending the DQPSK signal. The second module 720 is configured to restore the first original signal and second original signal from the demodulated signal through O/E conversion.

The first module includes: a splitter, a first detuned filter, and a second detuned filter. The splitter is configured to split the received DQPSK signal into two DQPSK signals, and output the two DQPSK signals. The first detuned filter is configured to demodulate one DQPSK signal output by the splitter in detuned filter mode, and output the demodulated signal to the second module. The second detuned filter is configured to demodulate the other DQPSK signal output by the splitter in detuned filter mode, and output the demodulated signal to the second module.

The first module may also include: a detuned filter and a splitter. The detuned filter is configured to demodulate the received DQPSK signal in detuned filter mode, and output the demodulated signal to the splitter. The splitter is configured to split the demodulated signal sent from the detuned filter into two demodulated signals, and output the demodulated signals to the second module.

**Embodiment 5**

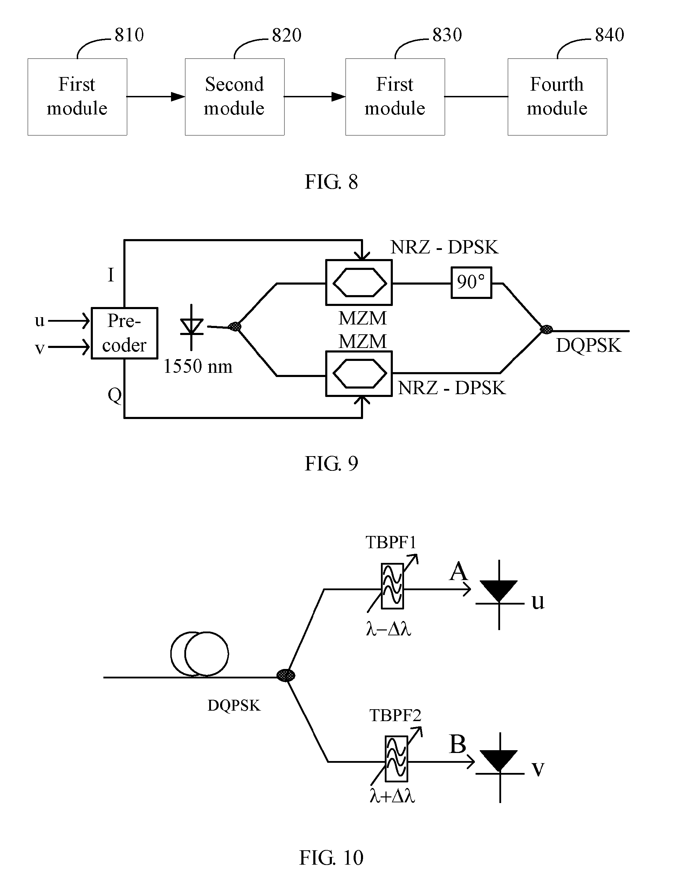

A transmitter provided in the fifth embodiment of the present invention is applied in the DQPSK system. As shown in FIG. 8, the transmitter includes: a first module 810, configured to pre-code input N first original signals and N second original signals, and generate N in-phase signals and N quadrature signals; a second module 820, configured to modulate the N phase signals to generate N first NRZ-DPSK signals, and modulate the N quadrature signals to generate N second NRZ-DPSK signals; a third module 830, configured to perform a 90 degree phase shift on the N first NRZ-DPSK signals or the N second NRZ-DPSK signals, and interfere with the other N NRZ-DPSK signals to obtain N DQPSK signals; and a fourth module 840, configured to multiplex the N DQPSK signals into a N-channel DQPSK signal, and send the N-channel DQPSK signal.

**Embodiment 6**

A receiver provided in this embodiment is applied in the DQPSK system. The receiver includes a first module and a second module. The first module is configured to demultiplex a received DQPSK signal into N DQPSK signals, and demodulate the N DQPSK signal in detuned filter mode. The method for obtaining a N-channel DQPSK signal includes: pre-coding the input N first original signals and N second original signals at the transmitter, and generating N in-phase signals and N quadrature signals; modulating the N in-phase signals to generate N NRZ-DPSK signals, and modulating the N quadrature signals to generate N second NRZ-DPSK signals; performing a 90 degree phase shift on the N first NRZ-DPSK signals or the N second NRZ-DPSK signals, and interfering with the other N NRZ-DPSK signals to obtain N DQPSK signals; multiplexing the N DQPSK signals into an N-channel DQPSK signal, and sending the N-channel DQPSK signal, where N is an integer greater than 1. The second module is configured to restore N first original signals and N second original signals from the demodulated signal through O/E conversion.

The first module includes: an N-channel AWG, N splitters, and 2N detuned filters. The N-channel AWG is configured to demultiplex a received N-channel DQPSK signal into N DQPSK signals, and output each DQPSK signal to a corresponding splitter; a splitter, configured to split one DQPSK signal of the demultiplexed N DQPSK signals sent from the N-channel AWG into two DQPSK signals, and output the two DQPSK signals; a detuned filter, configured to demodulate one DQPSK signal output by the splitter in detuned filter mode, and output the demodulated signal to the second module.

The first module may also include: a 2N-channel AWG, configured to demultiplex a received N-channel DQPSK signal in detuned filter mode to generate 2N demodulated signals, and output the demodulated signals to the second module.

The first module may also include: a splitter, a first ADM, a second ADM, a first AWG, and a second AWG. The splitter is configured to split a received N-channel DQPSK signal into two DQPSK signals, and output the DQPSK signals. The first ADM is configured to: extract odd-channel signals from an N-channel DQPSK signal output by the splitter, demodulate the odd-channel signals in detuned filter mode to generate N demodulated signals, and output the demodulated signals to the first AWG. The second ADM is configured to: extract even-channel signals from an N-channel DQPSK signal output by the splitter, demodulate the even-channel signals in detuned filter mode to generate N demodulated signals, and output the demodulated signals to the second AWG. The first AWG is configured to demultiplex N demodulated signals sent from the first ADM, and output each demodulated signal to the second module. The second AWG is configured to demultiplex the N demodulated signals sent from the second ADM, and output each demodulated signal to the second module.

**Embodiment 7**

This embodiment provides a transmitter. As shown in FIG. 9, two irrelevant 20 Gbps random streams u and v are used as the original bit signals, and are split into an in-phase signal I and a quadrature signal Q after being pre-coded in the circuit domain. Signals I and Q are modulated by two MZMs respectively. To implement simple decoding functions, the encoding rule is properly changed. The encoding formula is as shown in formula (3) or formula (4):

$$I_k = uv\bar{I}_{k-1} + \bar{u}vQ_{k-1} + u\bar{v}\bar{Q}_{k-1} + \bar{u}\,\bar{v}I_{k-1}$$

$$Q_k = uv\bar{Q}_{k-1} + \bar{u}vI_{k-1} + u\bar{v}\bar{I}_{k-1} + \bar{u}\,\bar{v}Q_{k-1} \quad (3)$$

Or:

$$I_k = \bar{v}I_{k-1}\bar{Q}_{k-1} + u\bar{I}_{k-1}\bar{Q}_{k-1} + \bar{u}I_{k-1}Q_{k-1} + vI_{k-1}\bar{Q}_{k-1}$$

$$Q_k = \bar{u}I_{k-1}\bar{Q}_{k-1} + vI_{k-1}\bar{Q}_{k-1} + uI_{k-1}\bar{Q}_{k-1} + \bar{v}I_{k-1}Q_{k-1} \quad (4)$$

Formulas (3) and (4) comply with the simplest and-or standard. The logical relationships represented by the two formulas are the same. Table 1 shows the encoding rules of formulas (3) and (4).

**Table 1 Encoding rule 1 for DQPSK modulation**

| $u_k$ | 1 | 0 | 1 | 0 |
|-------|---|---|---|---|
| $v_k$ | 1 | 1 | 0 | 0 |
| $I_k$ | $\bar{I}_{k-1}$ | $Q_{k-1}$ | $\bar{Q}_{k-1}$ | $I_{k-1}$ |
| $Q_k$ | $\bar{Q}_{k-1}$ | $\bar{I}_{k-1}$ | $I_{k-1}$ | $Q_{k-1}$ |

In addition, the encoding rule may be changed to that shown in Table 2.

**Table 2 Encoding rule 2 for DQPSK modulation**

| $u_k$ | 1 | 1 | 0 | 0 |
|-------|---|---|---|---|
| $v_k$ | 1 | 0 | 1 | 0 |
| $I_k$ | $\bar{I}_{k-1}$ | $Q_{k-1}$ | $\bar{Q}_{k-1}$ | $I_{k-1}$ |
| $Q_k$ | $\bar{Q}_{k-1}$ | $\bar{I}_{k-1}$ | $I_{k-1}$ | $Q_{k-1}$ |

In this case, the corresponding encoding formulas are as follows:

$$I_k = \bar{u}\,\bar{v}I_{k-1} + \bar{u}v\bar{Q}_{k-1} + uv\bar{I}_{k-1} + u\bar{v}Q_{k-1}$$

$$Q_k = \bar{u}\,\bar{v}Q_{k-1} + \bar{u}v\bar{I}_{k-1} + u\bar{v}I_{k-1} + uv\bar{Q}_{k-1} \quad (5)$$

or

$$I_k = u\,\bar{I}_{k-1}\bar{Q}_{k-1} + v\,\bar{I}_{k-1}\bar{Q}_{k-1} + u\,\bar{I}_{k-1}Q_{k-1} + v\,\bar{I}_{k-1}\bar{Q}_{k-1}$$

$$Q_k = v\,\bar{I}_{k-1}\bar{Q}_{k-1} + u\,\bar{I}_{k-1}\bar{Q}_{k-1} + u\,\bar{I}_{k-1}Q_{k-1} + v\,I_{k-1}\bar{Q}_{k-1}$$

$$(6)$$

**Embodiment 8**

This embodiment provides a receiver that uses a detuned filter to demodulate signals. The center wavelength of the filter is not exactly aligned with the carrier center wavelength, but is detuned relative to the carrier center wavelength. As shown in FIG. 10, two detuned filters are used to demodulate the DQPSK signal. According to encoding rules (3) and (4), signal u is output by the first detuned filter, and signal v is output by the second detuned filter. According to encoding rules (5) and (6), signal v is output by the first detuned filter, and signal u is output by the second detuned filter.

A lot of devices can implement the filter functions, such as a fiber grating, a thin film filter, and an AWG, which can be used to demodulate the DQPSK signal. To obtain good output signal quality, certain requirements are imposed for the bandwidth and detuning. The bandwidth and detuning of the filter should be selected to ensure that the linear area of the filter goes through the carrier center wavelength. If the bandwidth of the filter is large, the requirement for the detuning is high, and the output signal amplitude is small. If the output signal amplitude is small and the bandwidth of the filter is small, the requirement for the detuning is low. In this case, it is difficult to extract the phase change information. Generally, the bandwidth of the filter is equal to the detuning of the filter, which is 0.6 to 1.5 times the signal rate.

**Embodiment 9**

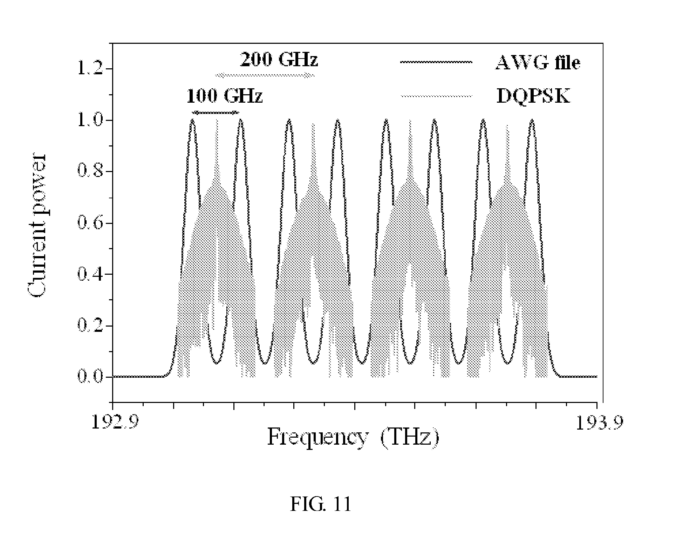

In this embodiment, the demultiplexing and demodulating processes are combined. As shown in FIG. 11, when the interval between channels is 200 GHz, an AWG with the channel interval of 100 GHz is used to demultiplex and demodulate signals. In this case, the carrier center wavelength of the DQPSK signal is not aligned with the channel center wavelength of the AWG, but located between two channels of the AWG. In this way, the two adjacent channels of the AWG are used to demodulate and demultiplex one channel of the DQPSK signal.

**Embodiment 10**

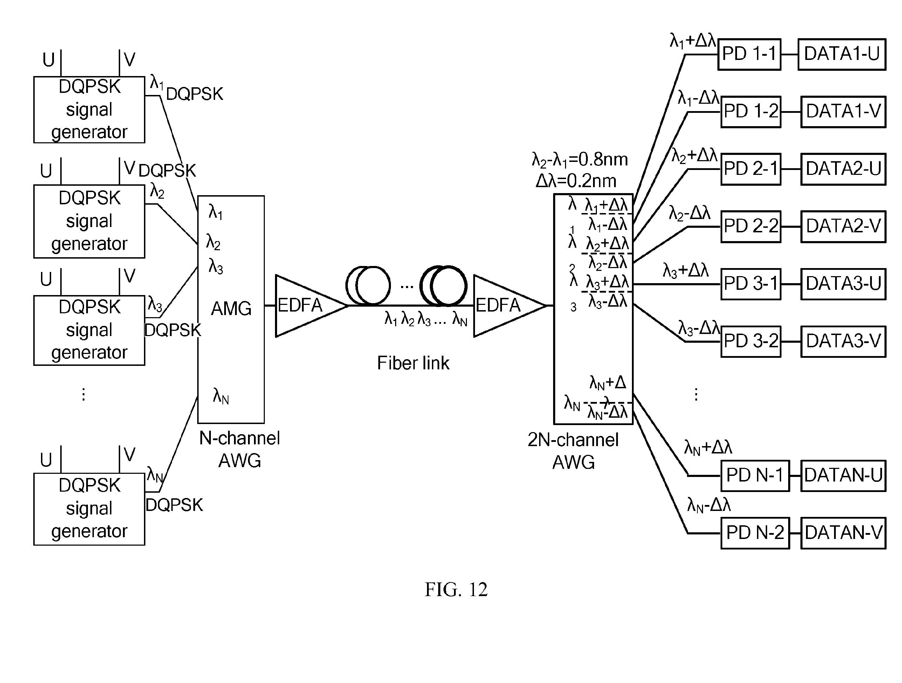

The tenth embodiment of the present invention provides s a DWDM system based on the DQPSK modulation format, as shown in FIG. 12. The following describes the embodiment based on the AWG. N DQPSK signals are multiplexed into a signal by the N-channel AWG, and the signal is transmitted to the receiver for demodulation via a fiber link. At the receiver, an N-channel AWG is used to demultiplex and demodulate the DQPSK signal. On the N-channel AWG, the two adjacent channels are used to demodulate one of the multiplexed signals. A certain offset exists between the working wavelengths of the two channels and the center wavelength of the multiplexed channel at the transmitter. In this way, with a proper offset from the original DQPSK signal, signals U and V may be directly demodulated from the two channels.

**Embodiment 11**

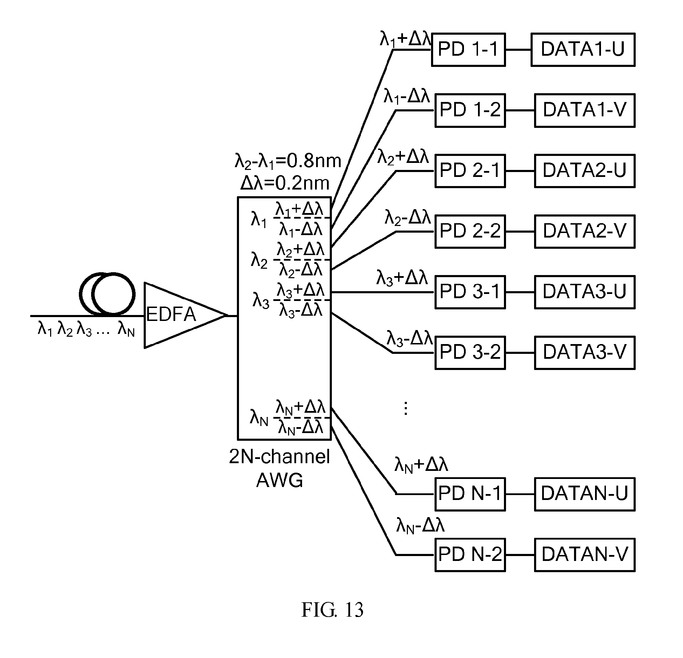

The eleventh embodiment of the present invention is based on a 40 Gbps DQPSK system, as shown in FIG. 13. If the channel interval is 100 GHz, a demultiplexer with the channel interval of 50 GHz is used at the receiver. However, the passband wavelength of the output channel is drifted by 25 GHz relative to the original standard passband wavelength. In this way, the two adjacent channels at the demultiplexer may be used to demultiplex and decode one channel on the original line.

In this embodiment, the channel center wavelength has a high offset tolerance. For the 40 Gbps DQPSK signal, if the channel interval is greater than 100 GHz, the solution shown in FIG. 13 may be used for demodulation and demultiplexing. However, if the channel interval is 50 GHz, the same solution for demodulation and demultiplexing cannot be used. Otherwise, serious channel crosstalk may occur.

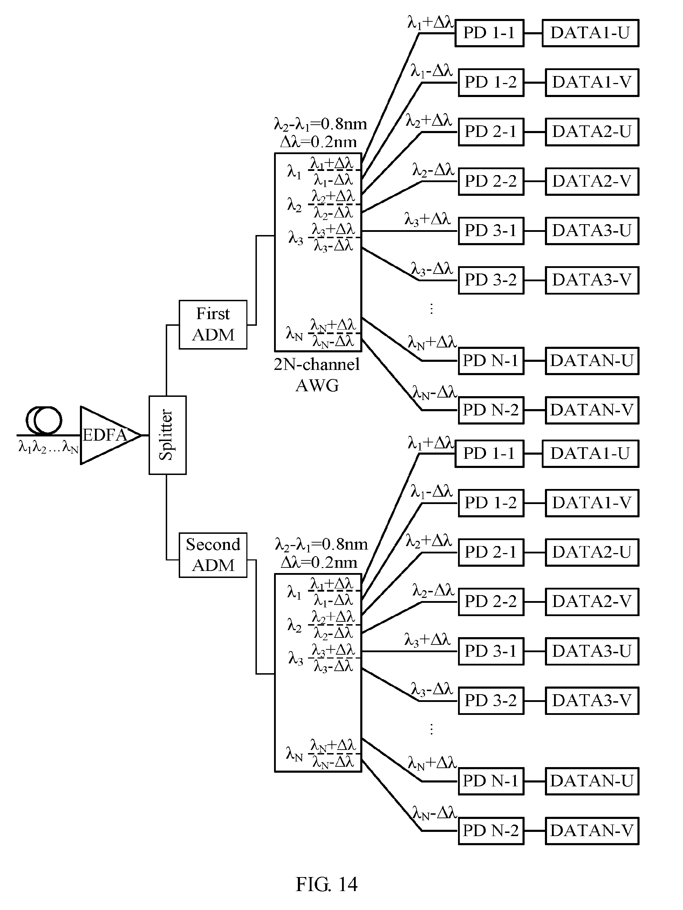

Taking the 40 Gbps DQPSK system as an example, if the line channel interval is 50 GHz, the receiver cannot decode and demultiplex the signal correctly by using the channel interval of 25 GHz due to serious channel crosstalk. In this case, an ADM technology needs to be used. That is, the odd channels and even channels of the original channels are separated, and a demodulated signal with the interval of 100 GHz is obtained; an AWG demultiplexer is used to decode and demultiplex the signal. As shown in FIG. 14, the specific implementation solution is as follows: An N-channel DQPSK signal transmitted on the fiber link is split by the splitter into two N-channel DQPSK signals; the two N-channel DQPSK signals are input to the first ADM and the second ADM respectively; the first ADM extracts odd-channel signals from one N-channel DQPSK signal, demodulates the N-channel DQPSK signal in detuned filter mode to generate N demodulated signals, and outputs the N demodulated signals to the N-channel AWG1 for demultiplexing, with each demodulated signal corresponding to an O/E converter; the second ADM extracts even-channel signals from the other N-channel DQPSK signal, demodulates the N-channel DQPSK signal in detuned filter mode to generate N demodulated signals, and outputs the N demodulated signals to the N-channel AWG2 for demultiplexing, with each demodulated signal corresponding to an O/E converter.

**Embodiment 12**

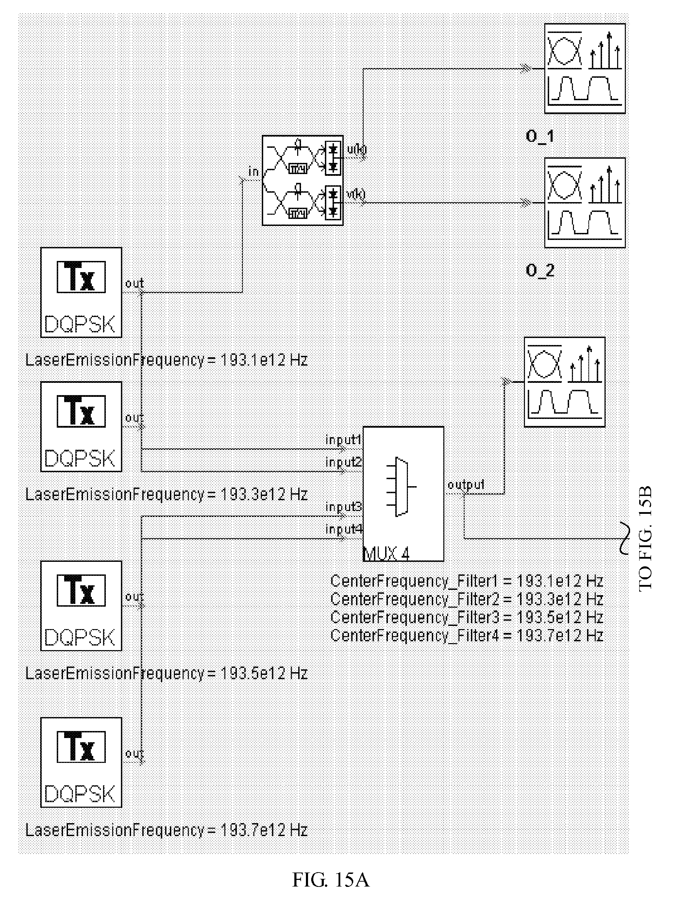

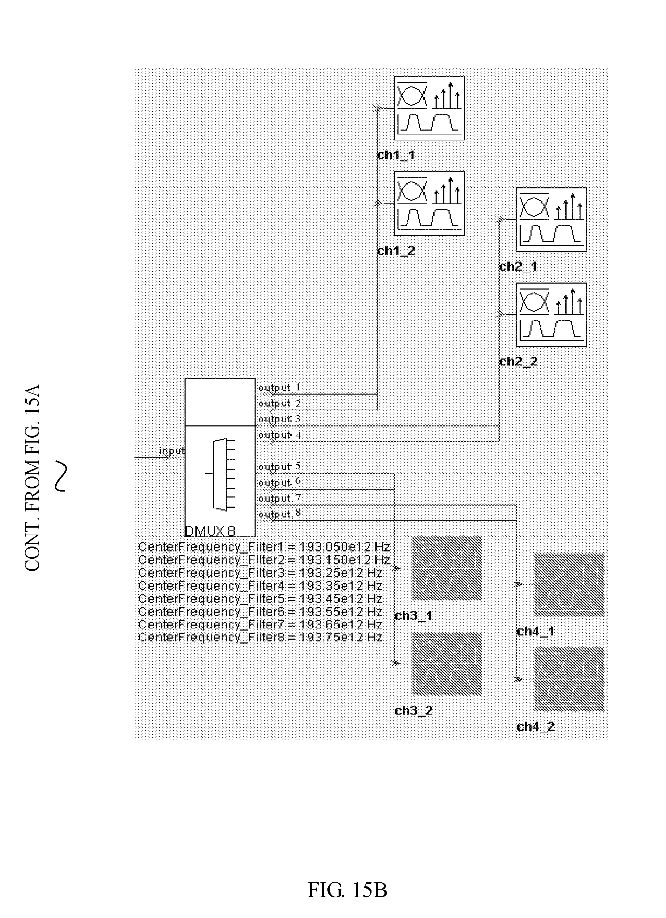

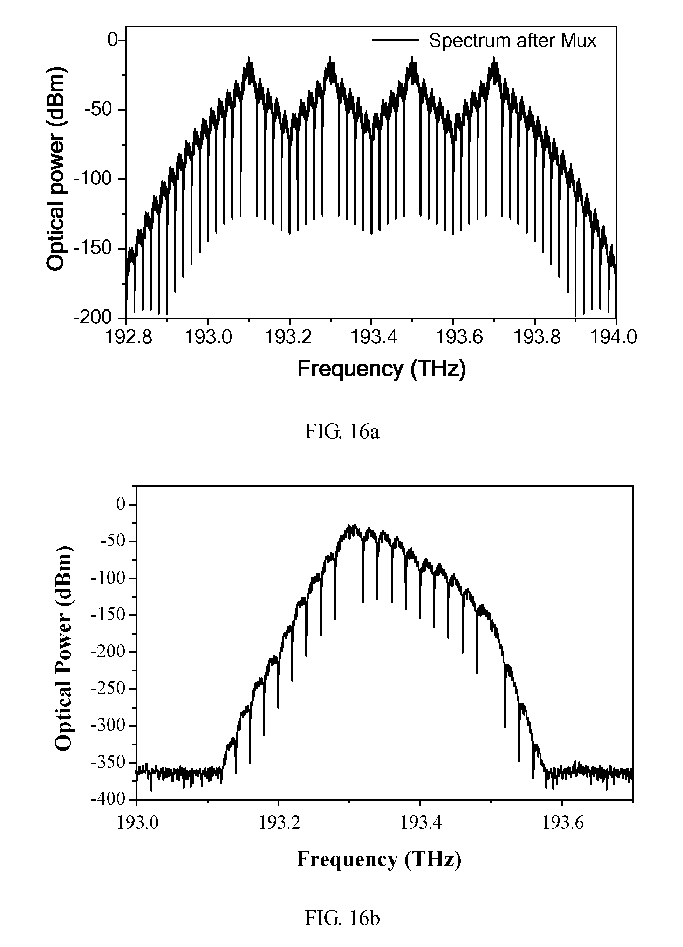

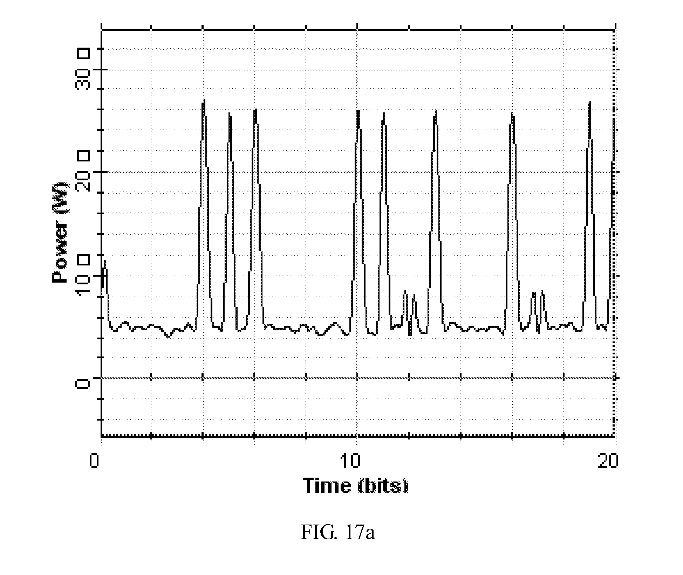

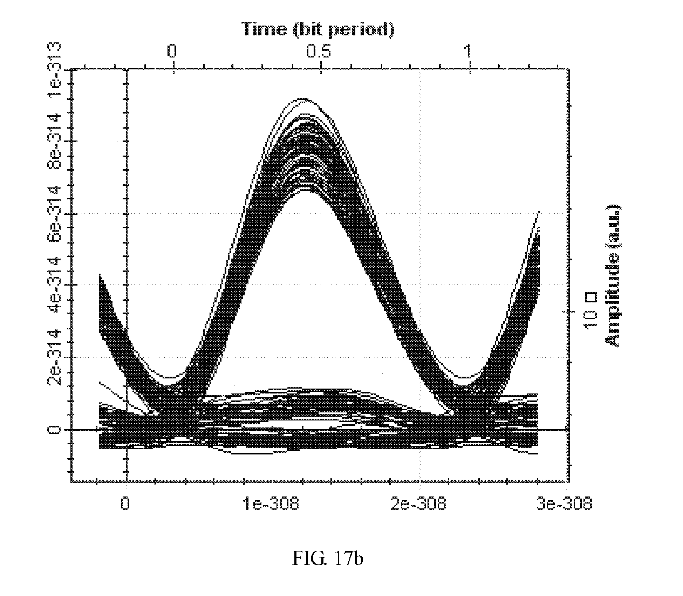

An analog transmission system is provided in this embodiment, as shown in FIG. 15. The carrier center frequencies of four NRZ-DQPSK signals are 193.1 THz, 193.3 THz, 193.5 THz, and 193.7 THz, and the signals are multiplexed by an eight-channel AWG. The center frequency of the eight-channel AWG is not offset, and the center of the passband is aligned with the center frequency of the carrier. At the receiver, an eight-channel AWG is used for demultiplexing and demodulation. The center frequencies of eight channels are as follows: 193.05 THz, 193.15 THz, 193.25 THz, 193.35 THz, 193.45 THz, 193.55 THz, 193.65 THz, and 193.75 THz. FIG. 16 illustrates the spectrum of four DQPSK signals after being multiplexed by the AWG and a spectrum of a signal after being demultiplexed by an eight-channel AWG. FIG. 17 illustrates the waveform and eye pattern of demodulated signals. However, considering that the channel interval of the AWG should comply with the International Telecommunication Union - Telecommunication Standardization Sector (ITU-T) standard and that demodulation requires the spectrum to be symmetric, the offset carrier of each center wavelength of the AWG for demultiplexing and demodulation is 50 GHz, and each DPQSK signal carrier is located in the middle of two adjacent channels of the AWG. However, the demodulation effect is not the best. For example, some signals with small amplitudes may appear on the waveform and eye pattern.

In this embodiment, a multi-channel DQPSK system is implemented by using the AWG as an example. It may also be implemented by using other multiplexers and demultiplexers, for example, a fiber grating, a thin film filter, or devices with dispersion filter features (for example, a volume grating and an FP standard device).

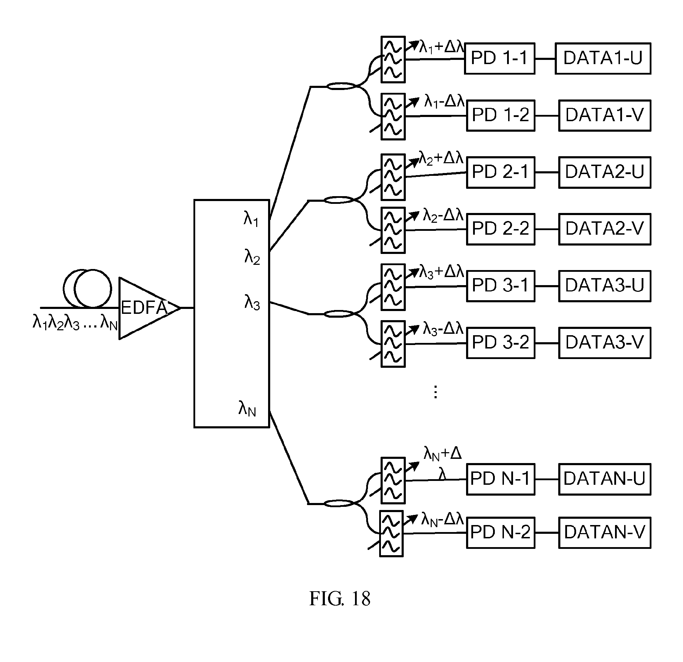

In this embodiment, the receiver may also demultiplex the multi-channel DQPSK signal by using a demultiplexer (with the same number of channels and the center wavelength corresponding to the carrier wavelength of each channel) corresponding to the multiplexer, and then demodulate each DQPSK signal by using two detuned filters to obtain original data streams, as shown in FIG. 18.

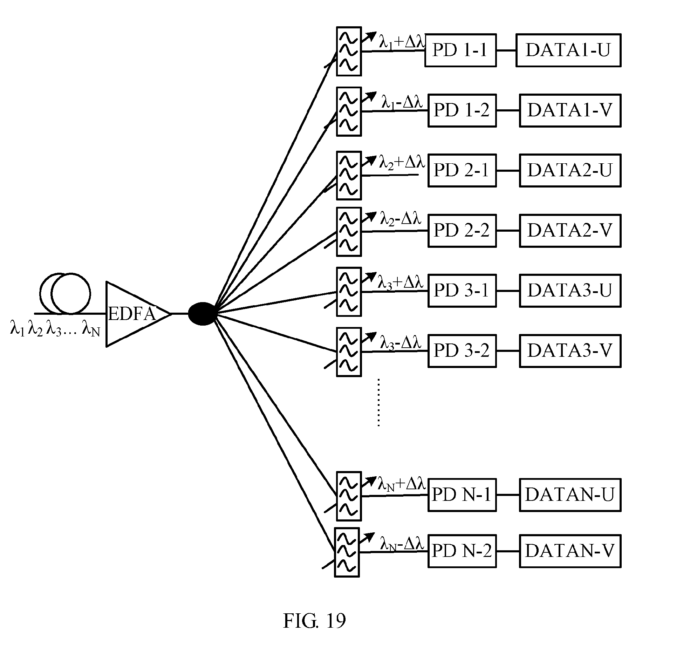

In this embodiment, the receiver may also split a multi-wavelength signal into multiple multi-wavelength signals by using a splitter, and then demodulate each multi-wavelength signal by using a detuned filter to obtain original data streams, as shown in FIG. 19.

A method for processing signals in an embodiment of the present invention includes:

1. The transmitter pre-codes an input first original signal and second original signal to generate an in-phase signal and a quadrature signal.

The pre-coding is performed according to the following encoding rules:

$$I_k = uv\,I_{k-1} + u\,\bar{v}\,Q_{k-1} + \bar{u}\,\bar{v}\,\bar{Q}_{k-1} + \bar{u}\,v\,\bar{I}_{k-1}$$

$$Q_k = uv\,Q_{k-1} + u\,\bar{v}\,\bar{I}_{k-1} + \bar{u}\,\bar{v}\,I_{k-1} + \bar{u}\,\bar{v}\,\bar{Q}_{k-1}$$

or

$$I_k = \bar{v}\,I_{k-1}\,\bar{Q}_{k-1} + u\,\bar{I}_{k-1}\,\bar{Q}_{k-1} + \bar{u}\,I_{k-1}Q_{k-1} + v\,\bar{I}_{k-1}\,Q_{k-1}$$

$$Q_k = u\,\bar{I}_{k-1}\,\bar{Q}_{k-1} + v\,I_{k-1}\,\bar{Q}_{k-1} + u I_{k-1}\,\bar{Q}_{k-1} + v\,\bar{I}_{k-1}Q_{k-1}$$

In the above rules, u refers to the first original signal, and v refers to the second original signal; I refers to the pre-coded in-phase signal, and Q refers to the pre-coded quadrature signal.

The pre-coding is performed according to the following encoding rules:

$$I_k = \bar{u}\,\bar{v}\,I_{k-1} + \bar{u}\,v\,\bar{Q}_{k-1} + uv\,\bar{I}_{k-1} + u\,\bar{v}\,\bar{Q}_{k-1}$$

$$Q_k = \bar{u}\,\bar{v}\,Q_{k-1} + \bar{u}\,v\,\bar{I}_{k-1} + \bar{u}\,vI_{k-1} + uv\,\bar{Q}_{k-1}$$

or

$$I_k = \bar{u}\,I_{k-1}\,\bar{Q}_{k-1} + v\,\bar{I}_{k-1}\,\bar{Q}_{k-1} + u\,\bar{I}_{k-1}\,Q_{k-1} + v\,I_{k-1}Q_{k-1}$$

$$Q_k = \bar{v}\,I_{k-1}\,\bar{Q}_{k-1} + u\,\bar{I}_{k-1}\,\bar{Q}_{k-1} + \bar{u}\,I_{k-1}Q_{k-1} + vI_{k-1}\,\bar{Q}_{k-1}$$

In the above rules, u refers to the first original signal, and v refers to the second original signal; I refers to the pre-coded in-phase signal, and Q refers to the pre-coded quadrature signal.

2. The transmitter modulates the in-phase signal to generate a first NRZ-DPSK signal, and modulates the quadrature signal to generate a second NRZ-DPSK signal.

3. The transmitter performs a 90 degree phase shift on the first NRZ-DPSK signal or the second NRZ-DPSK signal, and interferes with the other NRZ-DPSK signal to obtain a DQPSK signal.

The method further includes: the transmitter sends the DQPSK signal; the receiver demodulates the received DQPSK signal in detuned filter mode, and restores the first original signal and N second original signals from the demodulated signal through O/E conversion.

Another method for processing signals in an embodiment of the present invention includes:

1. The transmitter pre-codes input N first original signals and N second original signals to generate N in-phase signals and N quadrature signals.

2. The transmitter modulates the N in-phase signals to generate N first NRZ-DPSK signals, and modulates the N quadrature signals to generate N second NRZ-DPSK signals.

3. The transmitter performs a 90 degree phase shift on the N first NRZ-DPSK signals or the N second NRZ-DPSK signals, and interferes with the other N NRZ-DPSK signals to obtain N DQPSK signals, and multiplexes the N DQPSK signals into one N-channel DQPSK signal, where N is an integer greater than 1.

The method further includes: the transmitter sends the N-channel DQPSK signal; the receiver demultiplexes the received N-channel DQPSK signal into N DQPSK signals in detuned filter mode, and restores N first original signals and N second original signals through O/E conversion.

In embodiments of the present invention, the pre-coding of the transmitter is properly specified, but other encoding rules do not affect the feasibility of the solution. In this case, the demodulated data streams are different from the original data streams, but there is a certain mapping relationship between the demodulated data streams and the original data streams. After the data streams are demodulated, the circuit or software may be used to restore the original data.

In embodiments of the present invention, two detuned filters are used to demodulate the DQPSK signal. In this way, the traditional DQPSK demodulation solution in which two AMZIs and two balance detectors are used for demodulation is simplified; the accurate control on the phase difference between two arms of the AMZI is unnecessary, thus facilitating the signal control and adjustment, and greatly lowering the system cost.

In addition, in embodiments of the present invention, the demultiplexing and demodulation processes of the multi-channel DQPSK system are combined; two adjacent channels of the demultiplexer are directly used to demultiplex and demodulate one DQPSK signal; the center wavelengths of the two adjacent channels of the demultiplexer are properly offset from the center wavelength of the carrier. The detuned filter after the demultiplexer is saved, further lowering the cost, and improving the practicability of the solution.

Further, in embodiments of the present invention, the detuning of the filter has a certain working range. Thus, the filter may be applicable to multi-rate hybrid transmission systems in a certain range, for example, a 40 Gbps hybrid DQPSK system and a 50 Gbps hybrid DQPSK system. Certainly, if there is a huge difference between rates, it is difficult to implement demultiplexing and demodulation by using a demultiplexer with an equal channel interval.

Through the descriptions of the preceding embodiments, those skilled in the art may understand that the present invention may be implemented by using hardware only or by using software and a necessary universal hardware platform. Based on such understandings, the technical solution of the present invention may be embodied in the form of a software product. The software product may be stored in a nonvolatile storage medium, which can be a Compact Disk-Read Only Memory (CD-ROM), Universal Serial Bus (USB) flash disk, or a removable hard disk. The software product includes a number of instructions that enable a computer device (personal computer, server, or network device) to execute the methods provided in the embodiments of the present invention.

It should be noted that the above descriptions are merely exemplary embodiments of the present invention, and those skilled in the art may make various improvements and refinements without departing from the scope of the invention. All such modifications and refinements are intended to be covered by the present invention.

**Claims**

1. A differential quadrature phase shift keying (DQPSK) system, comprising a transmitter, wherein the transmitter comprises:

   a pre-coder, configured to pre-code a first original signal and a second original signal according a predetermined encoding rule, and generate an in-phase signal and a quadrature signal;
   a first modulator, configured to modulate the in-phase signal to generate a first differential phase shift keying (DPSK) signal;
   a second modulator, configured to modulate the quadrature signal to generate a second DPSK signal; and
   an interferometer, configured to: perform a 90 degree phase shift on the first DPSK signal or the second DPSK signal, interfere with and overlap with the other DPSK signal to obtain a DQPSK signal, and send the DQPSK signal to a receiver.

2. The system of claim 1, further comprising the receiver, wherein:

   the receiver comprises:

   a splitter, configured to split the DQPSK signal sent from the transmitter into two signals, and output the two signals; and
   a demodulator, configured to demodulate the two DQPSK signals output by the splitter.

3. The system of claim 1, wherein the modulators are Mach-Zehnder modulators (MZMs);
   the first MZM is configured to obtain the first DPSK signal through modulation and driving by using the in-phase signal;
   the second MZM is configured to obtain the second DPSK signal through modulation and driving by using the quadrature signal; and
   the interferometer is configured to: perform the 90 degree phase shift on the first DPSK signal or the second DPSK signal, interfere with the other DPSK signal to obtain the DQPSK signal, and send the DQPSK signal to the receiver.

4. The system of claim 2, wherein the demodulator comprises a first detuned filter and a second detuned filter;
   the first detuned filter is configured to demodulate one DQPSK signal output by the splitter in detuned filter mode, and output the demodulated DQPSK signal; and
   the second detuned filter is configured to demodulate the other DQPSK signal output by the splitter in detuned filter mode, and output the demodulated DQPSK signal.

5. The system of claim 1, wherein the receiver comprises a detuned filter and a splitter;
   the detuned filter is configured to demodulate the DQPSK signal sent from the transmitter in detuned filter mode, and output the demodulated DQPSK signal to the splitter; and
   the splitter is configured to split the signal demodulated by the detuned filter into two demodulated signals, and output the two signals.

6. The system of any of claims 1 to 5, wherein the predetermined encoding rule is:

$$I_k = uv\bar{I}_{k-1} + \bar{u}vQ_{k-1} + u\bar{v}\bar{Q}_{k-1} + \bar{u}\bar{v}I_{k-1}$$

or

$$Q_k = uv\bar{Q}_{k-1} + \bar{u}\bar{v}I_{k-1} + u\bar{v}\bar{I}_{k-1} + \bar{u}\bar{v}Q_{k-1}$$

$$I_k = \bar{v}I_{k-1}\bar{Q}_{k-1} + u\bar{I}_{k-1}\bar{Q}_{k-1} + \bar{u}\bar{I}_{k-1}Q_{k-1} + vI_{k-1}\bar{Q}_{k-1}$$

$$Q_k = \bar{u}\bar{I}_{k-1}\bar{Q}_{k-1} + vI_{k-1}\bar{Q}_{k-1} + uI_{k-1}\bar{Q}_{k-1} + \bar{v}I_{k-1}Q_{k-1}$$

wherein: u refers to the first original signal, and v refers to the second original signal; and
I refers to the pre-coded in-phase signal, and Q refers to the pre-coded quadrature signal.

7. A differential quadrature phase shift keying (DQPSK) system, comprising:

a transmitter, configured to: pre-code N first original signals and N second original signals according to a predetermined encoding rule to generate N in-phase signals and N quadrature signals; modulate the N in-phase signals to generate N first differential phase shift keying (DPSK) signals, and modulate the N quadrature signals to generate N second DPSK signals; perform a 90 degree phase shift on the N first DPSK signals or the N second signals, and interfere with and overlap with the other N DPSK signals to obtain N DQPSK signals; multiplex the N DQPSK signals into an N-channel DQPSK signal; and send the N-channel DQPSK signal to a receiver; and
the receiver, configured to: demultiplex the N-channel DQPSK signal sent from the transmitter into N DQPSK signals in detuned filter mode to restore the N first original signals and the N second original signals, wherein N is an integer greater than 1.

8. A method for processing signals, comprising:

by a transmitter, pre-coding an input first original signal and second original signal, and generating an in-phase signal and a quadrature signal; modulating the in-phase signal to generate a first differential phase shift keying (DPSK) signal, and modulating the quadrature signal to generate a second DPSK signal; performing a 90 degree phase shift on the first DPSK signal or the second DPSK signal, and interfering with the other DPSK signal to obtain a differential quadrature phase shift keying (DQPSK) signal.

9. The method of claim 8, wherein an encoding rule on which the pre-coding is based is:

$$I_k = uv\bar{I}_{k-1} + \bar{u}vQ_{k-1} + u\bar{v}\bar{Q}_{k-1} + \bar{u}\bar{v}I_{k-1}$$

or

$$Q_k = uv\bar{Q}_{k-1} + \bar{u}\bar{v}I_{k-1} + u\bar{v}\bar{I}_{k-1} + \bar{u}\bar{v}Q_{k-1}$$

$$I_k = \bar{v} I_{k-1} \bar{Q}_{k-1} + u \bar{I}_{k-1} \bar{Q}_{k-1} + \bar{u} I_{k-1} Q_{k-1} + v \bar{I}_{k-1} Q_{k-1}$$

$$Q_k = \bar{u} \bar{I}_{k-1} Q_{k-1} + v \bar{I}_{k-1} \bar{Q}_{k-1} + u I_{k-1} \bar{Q}_{k-1} + \bar{v} I_{k-1} Q_{k-1}$$

wherein: u refers to the first original signal, and v refers to the second original signal; and
I refers to the pre-coded in-phase signal, and Q refers to the pre-coded quadrature signal.

10. The method of claim 8, wherein an encoding rule on which the pre-coding is based is:

$$I_k = \bar{u} \bar{v} I_{k-1} + \bar{u} v \bar{Q}_{k-1} + u v I_{k-1} + u \bar{v} \bar{Q}_{k-1}$$

or

$$Q_k = \bar{u} \bar{v} Q_{k-1} + \bar{u} v \bar{I}_{k-1} + u \bar{v} I_{k-1} + u v \bar{Q}_{k-1}$$

$$I_k = \bar{u} I_{k-1} \bar{Q}_{k-1} + v \bar{I}_{k-1} \bar{Q}_{k-1} + u \bar{I}_{k-1} Q_{k-1} + v I_{k-1} Q_{k-1}$$

$$Q_k = \bar{v} I_{k-1} \bar{Q}_{k-1} + u \bar{I}_{k-1} \bar{Q}_{k-1} + \bar{u} I_{k-1} Q_{k-1} + v \bar{I}_{k-1} \bar{Q}_{k-1}$$

wherein: u refers to the first original signal, and v refers to the second original signal; and
I refers to the pre-coded in-phase signal, and Q refers to the pre-coded quadrature signal.

11. The method of claim 8, further comprising: sending, by the transmitter, the DQPSK signal; and
by the receiver, demodulating the received DQPSK signal in detuned filter mode; and restoring the first original
signal and the N second original signals from the demodulated signal through optical/electrical (O/E) conversion.

12. A method for processing signals, comprising:

by a transmitter, pre-coding input N first original signals and N second original signals, and generating N in-
phase signals and N quadrature signals;
modulating the N in-phase signals to generate N first non-return-to-zero differential phase shift keying (NRZ-
DPSK) signals, and modulating the N quadrature signals to generate N second DPSK signals; and
performing a 90 degree phase shift on the N DPSK signals or the N second DPSK signals, interfering with the
other N DPSK signals to obtain N DQPSK signals, and multiplexing the N DQPSK signals into an N-channel
DQPSK signal, wherein N is an integer greater than 1.

13. The method of claim 12, further comprising: sending, by the transmitter, the N-channel DQPSK signal; and
by the receiver, demultiplexing the received N-channel DQPSK signal into N DQPSK signals, demodulating the N
DQPSK signals in detuned filter mode, and restoring the N first original signals and the N second original signals
through optical/electrical (O/E) conversion.

FIG. 1

FIG. 2

320

First MZM

310

First
original
signal

Second
original
signal

Pre-coder

340

330

Second
MZM

Interferometer

DQPSK
signal

FIG. 3

420

First detuned
filter

440

First
original
signal

First O/E
converter

DQPSK
signal

410

Splitter

430

450

Second

Second
detuned filter

Second O/E
converter

original
signal

FIG. 4

FIG. 5

FIG. 6

FIG. 7

810 820 830 840

| First module | → | Second module | → | First module | — | Fourth module |

FIG. 8

NRZ - DPSK

u → Pre-coder
v →

I

1550 nm

MZM

90°

MZM

Q

NRZ - DPSK

DQPSK

FIG. 9

TBPF1

A → u

λ−Δλ

DQPSK

TBPF2

B → v

λ+Δλ

FIG. 10

FIG. 11

FIG. 12

FIG. 13

FIG. 14

O_1

O_2

in

u(k)

v(k)

Tx
DQPSK

out

LaserEmissionFrequency = 193.1e12 Hz

Tx
DQPSK

out

LaserEmissionFrequency = 193.3e12 Hz

input1

input2

input3

input4

MUX 4

output

CenterFrequency_Filter1 = 193.1e12 Hz
CenterFrequency_Filter2 = 193.3e12 Hz
CenterFrequency_Filter3 = 193.5e12 Hz
CenterFrequency_Filter4 = 193.7e12 Hz

Tx
DQPSK

out

LaserEmissionFrequency = 193.5e12 Hz

Tx
DQPSK

out

LaserEmissionFrequency = 193.7e12 Hz

TO FIG. 15B

FIG. 15A

CONT. FROM FIG. 15A

ch1_1

ch1_2

ch2_1

ch2_2

output 1
output 2
output 3
output 4

input

output 5
output 6
output 7
output 8

DMUX 8

CenterFrequency_Filter1 = 193.050e12 Hz
CenterFrequency_Filter2 = 193.150e12 Hz
CenterFrequency_Filter3 = 193.25e12 Hz
CenterFrequency_Filter4 = 193.35e12 Hz
CenterFrequency_Filter5 = 193.45e12 Hz
CenterFrequency_Filter6 = 193.55e12 Hz
CenterFrequency_Filter7 = 193.65e12 Hz
CenterFrequency_Filter8 = 193.75e12 Hz

ch3_1

ch4_1

ch3_2

ch4_2

FIG. 15B

FIG. 16a

FIG. 16b

FIG. 17a

FIG. 17b

FIG. 18

FIG. 19

| | INTERNATIONAL SEARCH REPORT | International application No. |
|---|---|---|
| | | PCT/CN2009/072025 |

A.  CLASSIFICATION OF SUBJECT MATTER

H04B 10/12 (2006.01) i
According to International Patent Classification (IPC) or to both national classification and IPC

B.    FIELDS SEARCHED

Minimum documentation searched (classification system followed by classification symbols)

IPC: H04B 10/-；H04Q 7/-；H04L 27/-

Documentation searched other than minimum documentation to the extent that such documents are included in the fields searched

Electronic data base consulted during the international search (name of data base and, where practicable, search terms used)

CPRS, CNKI, WPI, EPODOC, PAJ: modulate, modulation, modulating, code, coding, DPSK, DQPSK, keying, phase, shift, interference, interfere, interfering, add, demodulate, demodulation, demodulating, receive, filter, detuning

C.   DOCUMENTS CONSIDERED TO BE RELEVANT

| Cate | Citation of document, with indication, where appropriate, of the relevant passages | Relevant to |
|---|---|---|
| | CN2689607Y (NANJING NORMAL UNIVERSITY) 30 Mar. 2005 (30.03.2005) | |
| X | Abstract, description: line 5 of page 5 to line 14 of page 6, Fig. 1 | 1, 8 |
| Y | Abstract, description: line 5 of page 5 to line 14 of page 6, Fig. 1 | 2, 4, 7, 11-13 |
| A | The whole document | 3, 5, 6, 9, 10 |
| | CN1798121A (ALCATEL) 05 Jul. 2006 (05.07.2006) | |
| Y | Abstract, description: line 10 of page 4 to line 15 of page 5, Fig. 1 | 2, 4, 7, 11-13 |
| A | The whole document | 1, 3, 5, 6, 8-10 |
| A | CN1585503A (ZHONGXING COMMUNICATION CO., LTD.) 23 Feb. 2005 (23.02.2005) The whole document | 1-13 |

☐  Further documents are listed in the continuation of Box C.　　　☒  See patent family annex.

| * Special categories of cited documents: | "T"    later document published after the international filing date or priority date and not in conflict with the application but cited to understand the principle or theory underlying the invention |
|---|---|
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim (S) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"document member of the same patent family |

| Date of the actual completion of the international search | Date of mailing of the international search report |
|---|---|
| 19 Aug. 2009(19.08.2009) | 03 Sep. 2009 (03.09.2009) |

| Name and mailing address of the ISA/CN<br>The State Intellectual Property Office, the P.R.China<br>6 Xitucheng Rd., Jimen Bridge, Haidian District, Beijing, China<br>100088<br>Facsimile No. 86-10-62019451 | Authorized officer<br>WANG, Chunyan<br>Telephone No. (86-10)62411298 |
|---|---|

Form PCT/ISA/210 (second sheet) (April 2007)

**EP 2 326 033 A1**

## INTERNATIONAL SEARCH REPORT
### Information on patent family members

International application No.

*PCT/CN2009/072025*

| Patent Documents referred in the Report | Publication Date | Patent Family | Publication Date |
|---|---|---|---|
| CN2689607Y | 30.03.2005 | NONE | |
| CN1798121A | 05.07.2006 | US2006133827A1 | 22.06.2006 |
| | | EP1675281A1 | 28.06.2006 |
| | | EP1675281B1 | 15.08.2007 |
| | | DE602004008314E | 27.09.2007 |
| | | DE602004008314T2 | 08.05.2008 |
| | | AT370562T | 15.09.2007 |
| CN1585503A | 23.02.2005 | CN1286329C | 22.11.2006 |

Form PCT/ISA/210 (patent family annex) (April 2007)

**REFERENCES CITED IN THE DESCRIPTION**

**Patent documents cited in the description**

• CN 200810128212